# EUROPÄISCHE PATENTANMELDUNG

(11) **EP 0 933 550 A1**
(43) Veröffentlichungstag der Anmeldung: **04.08.1999**
(21) Anmeldenummer: 98810073.1
(22) Anmeldetag: 02.02.1998
(51) Int. Cl.: F16D 65/12

(54) **Bremsscheibe**

(71) Anmelder: ALUMINIUM RHEINFELDEN GmbH, 79618 Rheinfelden (DE)
(72) Erfinder: Botsch, Siegfried, 35282 Rauschenberg (DE); Koch, Hubert, 79618 Rheinfelden (DE)
(74) Vertreter: Patentanwälte Breiter + Wiedmer AG

(57) **Zusammenfassung**

Eine Bremsscheibe (10) weist einen Hut (12) aus einer Aluminium-Gusslegierung und einem Bremsring (14) aus Stahlguss oder Gusseisen auf. Der Hut (12) ist unter Ausbildung eines radialen Abstandes (b) zwischen Hut (12) und Bremsring (14) an am inneren Umfang (Uᵢ) des Bremsringes (14) angeformte Taschen (22) mit einem radial nach innen gerichteten eine Taschenöffnung begrenzenden Taschenrand (26) angegossen. Der Taschenrand (26) ist vom Hut (12) umgossen und die Taschen (22) sind im wesentlichen mit der Aluminium-Gusslegierung gefüllt. Durch diese Art der Anbindung des Bremsringes (14) an den Hut (12) kann eine Schirmung weitgehend verhindert werden.

## Beschreibung

Die Erfindung betrifft eine Bremsscheibe mit einem Hut aus einer Aluminium-Gusslegierung und einem Bremsring aus Stahlguss oder Gusseisen, wobei der Hut unter Ausbildung eines radialen Abstandes zwischen Hut und Bremsring an am inneren Umfang des Bremsringes radial einwärts ragende Verankerungsteile angegossen ist.

Bremsscheiben aus Gusseisen in belüfteter oder massiver Form sind allgemein bekannt. Die Narbenanbindung erfolgt über den Hut, der üblicherweise mit der Bremsscheibe in einem Stück gegossen oder aber eine aufgepresste Blechkonstruktion ist. Je nach Ausführung liegt das Gewicht einer Bremsscheibe zwischen etwa 6 und 15 kg für Personenwagen und bis ca. 40 bis 50kg für Lastkraftwagen.

Aus ATZ Automobiltechnische Zeitschrift 96 (1994) 9 ist ein Konzept bekannt, bei dem der Bremsring aus Grauguss und der Hut aus einer Aluminium-Legierung besteht. Die Anbindung erfolgt dort über Bolzen aus rostfreiem Stahl. Die Gewichtsersparnis einer derartigen Anordnung gegenüber üblichen Einstoffbremsscheiben beträgt etwa 10%. Dieses Konzept ist jedoch sehr teuer und wird daher nur in Kleinserien hochwertiger Fahrzeuge eingesetzt.

Eine Bremsscheibe der eingangs genannten Art ist in GB-A-2107012 offenbart. Dort besteht der Hut aus einer Aluminiumlegierung, die auf den Bremsring aufgegossen ist. Ein wesentlicher Nachteil dieses Lösungsansatzes ist die sehr steife Anbindung des Hutes an den Bremsring, der in der Folge zur Schirmung neigt, was u.a. ein sogenanntes Rubbeln der Bremsen verursacht.

Die Bremsscheibe stellt eine ungefederte Masse im Fahrzeug dar, d.h. eine Gewichtsersparnis in diesem Bereich würde eine spürbar bessere Fahrkomfortsteigerung und eine weitere Gewichtsreduzierung nach sich neben. Durch den Einsatz temperaturleitender Werkstoffe wie Aluminium-Legierungen kann zudem die Lebensdauer der Bremsscheiben signifikant erhöht werden.

Der Erfindung liegt deshalb die Aufgabe zugrunde, eine Bremsscheibe der eingangs genannten Art zu schaffen, welche ein vermindertes Verzugs- und Schirmungsverhalten zeigt und eine verbesserte Wärmeableitung aufweist.

Zur erfindungsgemässen Lösung der Aufgabe führt, dass die Verankerungsteile als am Bremsring angeformte Taschen mit einem radial nach innen gerichteten, eine Taschenöffnung begrenzenden Tasehenrand ausgebildet sind, wobei der Taschenrand vom Hut umgossen ist und die Taschen im wesentlichen mit der Aluminium-Gusslegierung gefüllt sind.

Die erfindungsgemäss taschenförmig ausgebildet Verankerungsteile führen nach dem formschlüssigen Umgiessen mit dem Hut zu einer quasi schwimmenden Lagerung des Bremsringes. Durch diese besondere Anbindung kann sich der Bremsring bei dieser Zweistoffbremsscheibe bei einer Erhitzung durch Bremsen frei in radialer Richtung aus-dehnen. Die Taschen dienen dabei als Führung und nehmen ebenso Kräfte in axialer Richtung auf Durch dieses 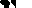 freie" Ausdehnen des Bremsringes schirmt der Bremsring nicht auf. Es entstehen nur geringe Spannungen im Bereich der Anbindung zwischen Hut und Bremsring, die jedoch im elastischen Bereich des Werkstoffes liegen.

Der Wärmeübergang vom Bremsring auf den Hut erfolgt nur über die Innenflächen der mit der Aluminium-Gusslegierung gefüllten Taschen. Dieser Wärmeübergang ist so bemessen, dass die verwendete Aluminium-Gusslegierung ihre Festigkeitseigenschaften beibehält. Es hat sich gezeigt, dass bei HFT-Tests, d.h. bei Bremsversuchen mit besonders hoher thermischer Beanspruchung der Bremsscheibe, die Temperatur im Hut nicht über 270°C anstieg. Diese Temperatur liegt im Temperaturbereich einer normalen Einstoffbremsscheibe.

Die erfindungsgemässe Konstruktion führt gegenüber einer Einstoffbremsscheibe zu einer Gewichtsverminderung von etwa 10%. Die Reduzierung der ungefederten Massen bedeutet gleichzeitig eine Steigerung des Fahrkomforts und zieht weitere Gewichtsreduzierungen an der Fahrzeugaufhängung nach sich.

Bevorzugt liegt die Anzahl der am Bremsring angeformten Taschen zwischen etwa 3 und 14.

Zur Verbesserung der Anbindung des Bremsringes an den Hut kann am Taschenrand ein nach aussen abragender ringförmiger Steg angeformt sein. Weiter kann die Tasche im Bereich des Taschenrandes eine ringförmige Hinterschneidung aufweisen.

Da die Taschen beim Angiessen des Hutes geschlossen werden, kann sich ein Luftpolster aufbauen. Um ein vollständiges Füllen der Taschen mit der Aluminium-Gusslegierung beim Angiessen des Hutes an den Bremsring sicherzustellen und damit einen möglichst hohen Wärmeübergang vom Bremsring auf den Hut zu erzielen, kann im Bereich des Taschenbodens eine Belüftungsöffung vorgesehen sein.

Bei einer bevorzugten Ausgestaltung der erfindungsgemässen Bremsscheibe besteht der Hut aus einer warmfesten, ggf. faser- und/oder partikelverstärkten Aluminium-Gusslegierung, die auch sprühkompaktiert sein kann, und der Bremsring aus Stahlguss oder Gusseisen, insbesondere aus einer Eisengusslegierung mit hohem Kohlenstoffgehalt.

Bevorzugt ist der Hut auf den Bremsring aufgegossen, wobei die Verbindung zwischen Hut und Bremsring durch Sandguss, Niederdruckguss, Kokillenguss, Pressguss, Druckguss, Squeezecasting oder Thixocasting hergestellt ist.

Weitere Vorteile, Merkmale und Einzelheiten der Erfindung ergeben sich aus der nachfolgenden Beschreibung bevorzugter Ausführungsbeispiele sowie anhand der Zeichnung; diese Zeigt schematisch in
- Fig. 1: einen teilweisen Querschnitt durch eine Bremsscheibe;
- Fig. 2: eine Draufsicht auf die Bremsscheibe von Fig. 1 in Blickrichtung y;
- Fig. 3: eine Schrägsicht auf eine Tasche am Bremsring von Fig. 1;
- Fig. 4: einen Querschnitt durch eine zweite Ausführungsform einer Tasche;
- Fig. 5: einen Querschnitt durch eine dritte Ausführungsform einer Tasche mit Belüftungsöffnung.

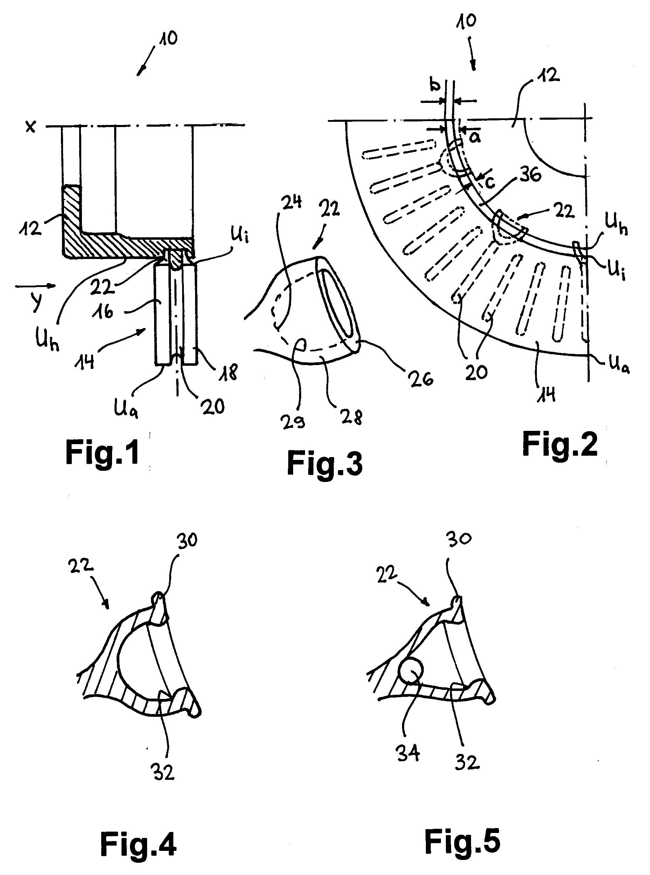

Eine in Fig. 1 und 2 dargestellte Bremsscheibe 10 weist einen Nabenteil oder Hut 12 und einen mit diesem verbundenden innenbelüfteten Bremsring 14 auf Zur Montage der Bremsscheibe 10 wird der Hut in Richtung der Scheibenachse x einer in der Zeichnung nicht dargestellten Radnabe eines Fahrzeuges aufgesetzt und an dieser festgeschraubt.

Der in der Zeichnung dargestellte Bremsring 14 ist innenbelüftet und setzt sich zusammen aus einem äusseren Reibring 16 und einem inneren Reibring 18, die über radial angeordnete, sich vom Bereich des äusseren Umfanges Uₐ zum Bereich des inneren Umfanges Uᵢ des Bremsringes erstreckende Stege 20 verbunden sind. Jeder vierte Steg 20 endet in einer Tasche 22, die mit ihrem Taschenrand 26 den inneren Umfang Uᵢ um ein Mass a übertagt. Im vorliegenden Beispiel sind am inneren Umfang Uᵢ des Bremsrings 14 zehn Taschen 22 angeordnet. Der Taschenrand 26 ist in radialer Draufsicht etwa oval ausgestaltet, wobei die längere Ovalachse in der Scheibenebene liegt.

Beim Umgiessen des Bremsringes 14 mit dem Hut 12 erfolgt die Anbindung über die sich von einem Taschenboden 24 zum Taschenrand 26 erstreckende Taschenwand 28, die um ein Mass c vom äusseren Hutumfang Uₐ in den Hut 12 einragt, wobei auch die Tasche 22 beim Angiessen des Hutes 12 gefüllt wird.

Der innere Umfang Uᵢ des Bremsringes 14 ist vom Hutumfang Uₐ um ein Mass b unter Bildung eines nur im Bereich der Taschen 22 unterbrochenen Luftspaltes 36 beabstandet.

Die Fig. 4 und 5 zeigen weitere Ausbildungsformen einer Tasche 22. Am Taschenrand 26 ist ein ringförmiger Wulst oder Steg 30 nach aussen abragend angeformt. Zusätzlich ist an der Tascheninnenfläche 29 beim Übergang zwischen Taschenwand 28 und Taschenrand 26 eine ringförmige Hinterschneidung 32 angeordnet. In Fig. 5 ist zusätzlich im Bereich des Taschenbodens 24 eine Belüftungsöffnung 34 in der Form einer den äusseren Reibring 16 durchsetzenden Bohrung vorgesehen. Mit dieser Belüfungsöffnung 34 ist gewährleistet, dass beim Angiessen des Hutes 12 an den Bremsring 14 eine vollständige Füllung der Taschen 22 erfolgt.

Als Beispiel für einen Werkstoff zur Fertigung des Hutes 12 sei hier die Legierung G-AlSi 12 CuNiMg genannt. Der Bremsring kann beispielsweise in Grauguss ausgeführt sein.

Obschon sich die in der Zeichnung dargestellten Ausführungsbeispiele auf innenbelüftete Bremsscheiben mit äusserem und innerem Reibring beziehen, umfasst die vorliegende Erfindung selbstverständlich auch die Anformung von Taschen an massiven Bremsringen.

## Patentansprüche

1. Bremsscheibe mit einem Hut (12) aus einer Aluminium-Gusslegierung und einem Bremsring (14) aus Stahlguss oder Gusseisen, wobei der Hut (12) unter Ausbildung eines radialen Abstandes (b) zwischen Hut (12) und Bremsring (14) an am inneren Umfang (Uᵢ) des Bremsringes (14) radial einwärts ragende Verankerungsteile angegossen ist,
dadurch gekennzeichnet, dass
die Verankerungsteile als am Bremsring (14) angeformte Taschen (22) mit einem radial nach innen gerichteten, eine Taschenölffnung begrenzenden Taschenrand (26) ausgebildet sind, wobei der Taschenrand (26) vom Hut (12) umgossen ist und die Taschen (22) im wesentlichen mit der Aluminium-Gusslegierung gefüllt sind.

2. Bremsscheibe nach Anspruch 1, dadurch gekennzeichnet, dass die Anzahl der Taschen (22) zwischen etwa 3 und 14 liegt.

3. Bremsscheibe nach Anspruch 1 oder 2, dadurch gekennzeichnet, dass am Taschenrand (26) ein ringförmiger Steg (30) angeformt ist und nach aussen abragt.

4. Bremsscheibe nach einem der Ansprüche 1 bis 3, dadurch gekennzeichnet, dass die Taschen (22) im Bereich des Taschenrandes (26) eine ringförmige Hinterschneidung (32) aufweisen.

5. Bremsscheibe nach einem der Ansprüche 1 bis 4, dadurch gekennzeichnet, dass im Bereich des Taschenbodens (24) eine Belüftungsöffnung (34) vorgesehen ist.

6. Bremsscheibe nach einem der Ansprüche 1 bis 5, dadurch gekennzeichnet, dass der Hut (12) aus einer warmfesten, gegebenenfalls faser- und/oder partikelverstärkten Aluminium-Gusslegierung und der Bremsring (14) aus Stahlguss oder Gusseisen, insbesondere aus einer Eisengusslegierung mit hohem Kohlenstoffgehalt besteht.

7. Bremsscheibe nach einem der Ansprüche 1 bis 6, dadurch gekennzeichnet, dass der Hut (12) auf den Bremsring (14) aufgegossen ist.

8. Bremsscheibe nach einem der Ansprüche 1 bis 7, dadurch gekennzeichnet, dass die Verbindung zwischen Hut (12) und Bremsring (14) durch Sandguss, Niederdruckguss, Kokillenguss, Pressguss, Druckguss, Squeezecasting oder Thixocasting hergestellt ist.
